# EUROPÄISCHE PATENTSCHRIFT

(11) **EP 2 822 230 B1**
(45) Veröffentlichungstag und Bekanntmachung des Hinweises auf die Patenterteilung: **18.10.2017**
(21) Anmeldenummer: 13175105.9
(22) Anmeldetag: 04.07.2013
(51) Int. Cl.: H04L 12/40

(54) **Datenübertragung über einen Speicher einer Kommunikationsvorrichtung**
Data transmission via a memory of a communication device
Transmission de données via une mémoire d'un dispositif de communication

(43) Veröffentlichungstag der Anmeldung: 07.01.2015
(73) Patentinhaber: Omicron electronics GmbH, 6833 Klaus (AT)
(72) Erfinder: Steinhauser, Fred, 6833 Klaus (AT); Jochum, Michael, 6844 Altach (AT); Yehieli, Tal, 6842 Koblach (AT)
(74) Vertreter: Banzer, Hans-Jörg

(56) Entgegenhaltungen:
- WO-A1-2012/149303
- US-A1- 2008 165 769
- US-A1- 2010 306 457
- US-A1- 2011 022 801

## Beschreibung

Die vorliegende Erfindung betrifft ein Verfahren zur Datenübertragung über eine Kommunikationsvorrichtung sowie eine entsprechende Kommunikationsvorrichtung. Die vorliegende Erfindung betrifft insbesondere ein Verfahren zur bidirektionalen Datenübertragung über eine Kommunikationsvorrichtung in Kommunikationsnetzen mit Zeitverteilungsprotokollen.

In einem Kommunikationsnetzwerk, beispielsweise einem Datenübertragungsnetz, welches verschiedene Recheneinheiten und Steuereinheiten beispielsweise in einem Energieversorgungssystem miteinander koppelt, kann ein zeitlich genaue Steuerung und Erfassung von Informationen von großer Wichtigkeit sein. Zu diesem Zweck können die über das Kommunikationsnetzwerk miteinander in Verbindung stehenden Systeme jeweils eigene Uhren aufweisen, welche beispielsweise durch Austauschen von Synchronisationsnachrichten über das Kommunikationsnetzwerk synchronisiert werden können. Ein Beispiel für ein derartiges Verfahren ist die Zeitsynchronisation gemäß der Norm IEEE 1588. Die Laufzeiten der Datenpakete zwischen den Uhren der verschiedenen Systeme werden dabei ausgemessen und kompensiert. Voraussetzungen für das Funktionieren eines solchen Verfahrens sind, dass die Laufzeiten konstant und symmetrisch sind, d.h., dass die Verzögerung in beiden Richtungen identisch ist. Häufig werden als Kommunikationsnetzwerke Netzwerke vom Ethernet-Typ verwendet und die zwischen den Uhren ausgetauschten Datenpakete werden durch Ethernet-Switches weitergeleitet.

Die Druckschrift US 2010/0306457 A1 offenbart einen Mikrocontroller mit einem CAN-Modul ("Controller-Area Network") zum Einsatz in einem CAN-Bussystem. Der CAN-Mikrocontroller umfasst eine Steuereinheit zum Empfangen von CAN-Mitteilungen, wobei die Steuereinheit in einer Tabelle einen Eintrag mit einer ID der CAN-Mitteilung, Nutzdaten der CAN-Mitteilung und Informationen über einen nachfolgenden Tabelleneintrag speichert. Bei dem CAN-Mikrocontroller kann es sich um einen 32-bit-Mikrocontroller handeln, wobei jeder Tabelleneintrag aus sechs 32-bit-Worten besteht. Der CAN-Mikrocontroller umfasst einen einzigen Sendepuffer und einen doppeltgepufferten Empfangspuffer, wobei die Tabelleneinträge eine Pufferdeskriptortabelle zum Speichern der CAN-Mitteilungen auf eine bestimmte Art und Weise in einem RAM-Speicher bilden. Bei Empfang eines Datenrahmens in dem Empfangspuffer wird mit Hilfe eines Interrupts der CAN-Mikrocontroller angewiesen, den Empfangspuffer zu leeren, ehe ein nachfolgender Datenrahmen empfangen werden kann.

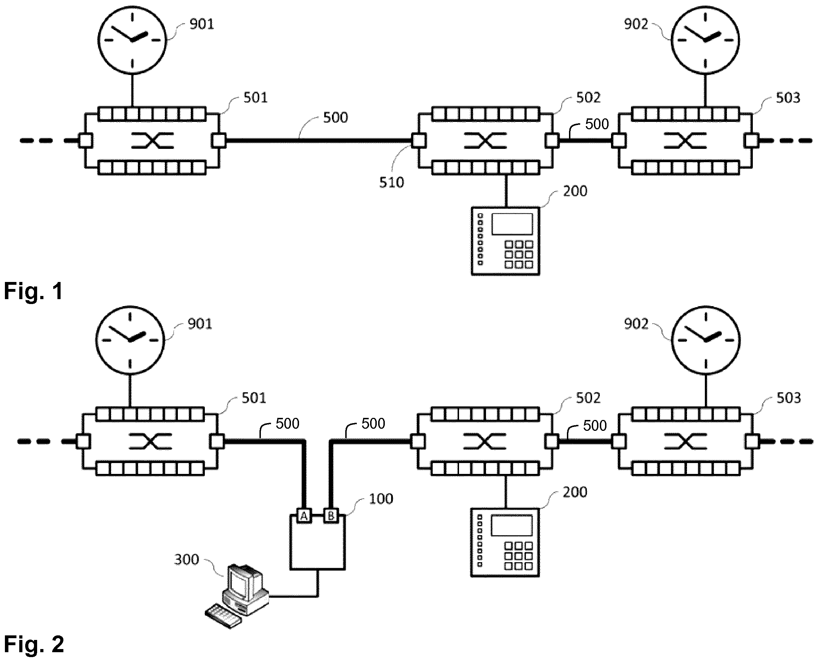

Fig. 1 zeigt ein Netzwerk, an welchem zwei Systeme mit Uhren 901 und 902 angeschlossen sind. Die Uhren 901 und 902 können beispielsweise Uhren oder Zeitsteuerungsvorrichtungen von entsprechenden Computersystemen oder Steuersystemen sein. Die Uhren 901 und 902 sind über das Netzwerk miteinander gekoppelt. Das Netzwerk kann eine beliebige Größe aufweisen. Beispielsweise kann das Netzwerk innerhalb eines Gebäudes installiert sein oder das Netzwerk kann sich über entsprechende Weitverkehrsnetze über Entfernungen von mehreren hundert oder mehreren tausend Kilometern erstrecken. Das Netzwerk kann, wie es in dem Stand der Technik bekannt ist, mehrere Netzwerkverteiler, beispielsweise Ethernet-Switches 501, 502 und 503 sowie Verbindungen 500 zwischen den Ethernet-Switches 501-503 umfassen. Die Verbindungen 500 können beispielsweise elektrische oder optische Datenverbindungen umfassen. Die Datenpakete zur Zeitsynchronisation zwischen den Uhren 901 und 902 werden über die Ethernet-Switches 501-503 sowie die Verbindungen 500 ausgetauscht. Typischerweise sind an einem derartigen Netzwerk auch andere Geräte angeschlossen, wie beispielsweise das Gerät 200. Diese anderen Geräte erzeugen einen zusätzlichen Datenverkehr auf dem Netzwerk, welcher mit den zwischen den Uhren 901 und 902 ausgetauschten Datenpaketen zur Zeitsynchronisation interferieren kann. Der Datenverkehr zwischen zwei Geräten, welche nicht am selben Ethernet-Switch angeschlossen sind, wird über die Verbindungen 500 zwischen den Ethernet-Switches 501-503 weitergeleitet. Die Verbindungen 500 werden auch als sogenannte Trunk-Links bezeichnet. Diese Trunk-Links sind an sogenannten Trunk-Ports 510 angeschlossen. Die Datenpakete können einen Trunk-Port üblicherweise nur nacheinander durchlaufen. Dadurch kann es vorkommen, dass ein Datenpaket für die Zeitsynchronisation der beiden Uhren 901 und 902 nicht sofort über den Trunk-Link 500 weitergeleitet werden kann, da gerade ein Datenpaket von dem Gerät 200 über den Trunk-Port 510 ausgegeben wird. Das Datenpaket für die Zeitsynchronisation wird somit aufgehalten, bis das Senden des Datenpakets von dem Gerät 200 abgeschlossen ist. Dadurch sind die Durchlaufzeiten der Datenpakete durch die Ethernet-Switches 501-503 unbestimmt und die Verweilzeiten der Datenpakete in den Ethernet-Switches 501-503 können variieren. Daher sind übliche Ethernet-Switches, welche keine der nachfolgend beschriebenen geeigneten Vorkehrungen aufweisen, nicht geeignet, um in Netzwerken mit genauer Zeitsynchronisation eingesetzt zu werden. Für diesen Fall werden speziell ausgestattete Ethernet-Switches 501-503 benötigt, welche beispielsweise einen sogenannten transparenten Modus (englisch: transparent mode) aufweisen. Derartige Ethernet-Switches bestimmen die tatsächlichen Verweilzeiten (englisch: residence time) der Datenpakete im Switch und teilen diese Verweilzeiten den Uhren 901 und 902 mit. Aufgrund der Kenntnis der tatsächlichen Durchlaufzeit durch die Ethernet-Switches 501-503 können die Uhren diese berücksichtigen und sich somit synchronisieren. Eine Anordnung, bei welcher die Durchlaufzeit ermittelt und mitgeteilt wird, wird auch als "transparent clock" bezeichnet. Der Aufwand für die Implementierung einer derartigen Anordnung mit einem Transparent-Clock-Verfahren ist jedoch beträchtlich und die Hardware, d.h. der Aufbau der Ethernet-Switches, muss je nach geforderter Genauigkeit bestimmte Voraussetzungen erfüllen.

Bei einem Kommunikationsnetzwerk kann es ferner erforderlich sein, dass in eine der Verbindungen 500 des Kommunikationswegs zwischen den zwei Uhren 901 und 902 ein weiteres Gerät 100 eingeschleift wird, wie es in Fig. 2 gezeigt ist. Das Gerät 100 kann beispielsweise zum Mithören der Kommunikation auf dem Netzwerk für Diagnosezwecke verwendet werden. Netzwerkanschlüsse A und B des Geräts 100, welche zum Einschleifen des Geräts 100 mit den Verbindungen 500 verbunden werden, werden als "inline ports" bezeichnet. Das Gerät 100 wird lokal von beispielsweise einem Computer 300 bedient. Das Gerät 100 kann beispielsweise die Daten zwischen den Inline Ports A und B unverändert durchleiten, d.h., die Daten werden von Inline Port A nach Inline Port B weitergeleitet oder in entgegengesetzter Richtung von dem Inline Port B zu dem Inline Port A weitergeleitet und gegebenenfalls abgegriffen. Das Gerät 100 speist jedoch keine eigenen Datenpakete in den Trunk-Link 500 ein, d.h., es werden keine eigenen Datenpakete über die Inline Ports A und B versendet. Ein derartiges zum Mithören eingeschleiftes Gerät 100 wird auch als "Tap" bezeichnet. Die Netzwerkverbindung 500, in welche der Tap eingeschleift wird, wird in Anlehnung daran "getappter Link" genannt. Die Art und Weise wie das Gerät 100 die Datenpakete weiterleiten kann ist unterschiedlich. Bei einem sogenannten passiven Tap sind die Inline Ports A und B auf der physikalischen Schicht miteinander verbunden. Die Signale werden auf der physikalischen Schicht im Gerät 100 abgegriffen und die logischen Pegel daraus wiedergewonnen. Die Datenpakete laufen somit praktisch ohne Verzögerung von dem einen Inline Port zu dem anderen Inline Port durch das Gerät 100. Ein aktives Tap hingegen liest die Datenpakete von einem Inline Port ein und sendet sie danach am anderen Inline Port wieder aus. Dies kann beispielsweise mit einem sogenannten "store and forward"-Verfahren realisiert werden, bei welchem die Datenpakete in Gänze eingelesen werden, bevor sie weiter gesendet werden. Die Verzögerung der Datenpaketweiterleitung ist bei diesem Verfahren also von der Datenpaketgröße abhängig. Um die Verweilzeit eines Datenpakets in dem Gerät 100 zu minimieren, kann jedoch mit dem Senden bereits wieder begonnen werden, bevor das gesamte Datenpaket eingelesen ist. Ein derartiges Verfahren wird als Cut-Through-Verfahren bezeichnet. Das Weiterleiten beginnt beispielsweise, nachdem ein bestimmter Teil des Datenpakets eingelesen ist. Bei dem Cut-Through-Verfahren ist die Durchlaufzeit somit unabhängig von der Paketgröße und kann somit konstant realisiert werden.

Wenn die Durchlaufzeit konstant und symmetrisch ist, erscheint das Gerät 100, welches beispielsweise gemäß dem zuvor beschriebenen Cut-Through-Verfahren arbeitet, wie ein zusätzliches Stück Verbindungsleitung mit einer bestimmten Länge. Die dadurch verursachten Verzögerungen können somit von einem Zeitsynchronisationsmechanismus einfach kompensiert werden. Sofern das Gerät 100 nur Datenpakete zwischen den Inline Ports weiterleitet und gegebenenfalls abgreift, jedoch keine eigenen Datenpakete über die Inline Ports A, B versendet, kann die Funktionsweise der Zeitsynchronisation zwischen den Uhren 901 und 902 beispielsweise gemäß IEEE 1588 realisiert werden.

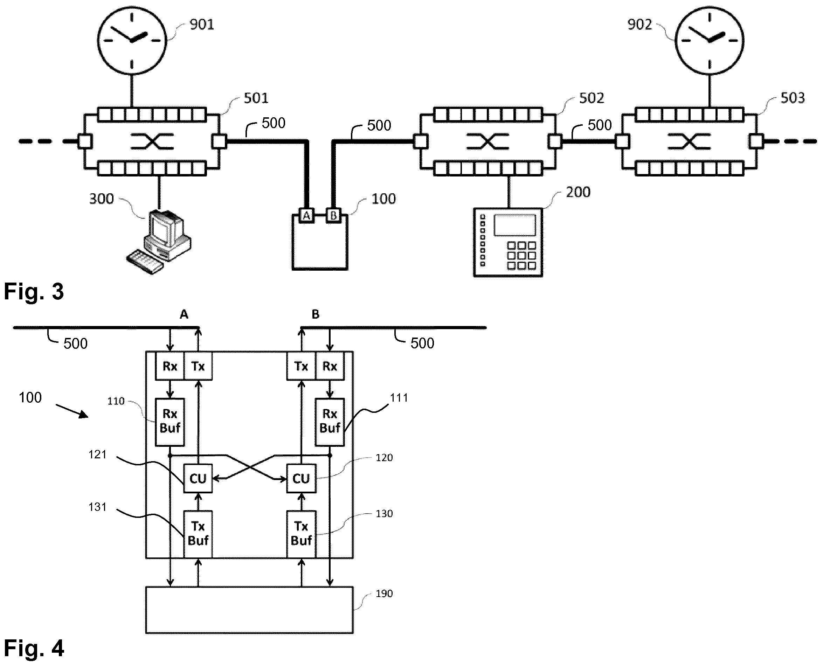

Bei üblichen Netzwerken können jedoch Fälle auftreten, bei denen das Gerät 100 zusätzlich selbst erzeugte Datenpakete über die Inline Ports A und/oder B aussendet. Beispielsweise wenn das Gerät 100 nicht lokal über den daran angeschlossenen Computer 300 bedient wird, wie es in Fig. 2 gezeigt ist, sondern wenn das Gerät 100 über die Inline Ports A, B ferngesteuert wird. Auch in dem Fall, wenn das Gerät 100 aufgezeichnete Daten über den getappten Link an beispielsweise eine zentrale Verarbeitung weiterleiten soll, besteht die Notwendigkeit, von dem Gerät 100 erzeugte Datenpakete über die Inline Ports A und B auszugeben. Fig. 3 zeigt eine derartige Situation, in welcher der Computer 300 zur Steuerung des Geräts 100 nicht mehr lokal und direkt am Gerät 100 angeschlossen ist, sondern am Switch 501 angeschlossen ist. Der Datenaustausch zwischen dem Computer 300 und dem Gerät 100 zur Steuerung des Geräts 100 erfolgt nun über den getappten Link 500. Dieser Datenaustausch kann beispielsweise bidirektional erfolgen, d.h., das Gerät 100 wird über den Inline Port A Pakete von dem Computer 300 empfangen und Datenpakete für den Computer 300 aussenden. In diesem Fall, in weichem von dem Gerät 100 selbst erzeugte Datenpakete über die Inline Ports A, B ausgesendet werden, kann es zu einer Konfliktsituation kommen, in welcher das von dem Gerät 100 erzeugte Datenpaket gleichzeitig mit einem über die Verbindung 500 durch das Gerät 100 weiterzuleitenden Datenpaket zu übertragen ist. Eine derartige Situation kann zu einer Verzögerung von einem der Datenpakete führen. Beispielsweise kann das jeweils später kommende bzw. erzeugte Datenpaket aufgehalten werden, bis ein früher ankommendes oder erzeugtes Datenpaket vollständig versendet wurde. Hat das Gerät 100 beispielsweise bereits damit begonnen, ein selbsterzeugtes Datenpaket über den Inline Port A an den Switch 501 zu senden, dann wird das Gerät 100 zunächst das gesamte selbsterzeugte Datenpaket versenden und erst danach damit beginnen, ein Datenpaket weiterzuleiten, welches von dem Switch 502 an dem Inline Port B zur Weiterleitung zum Switch 501 empfangen wurde. Dadurch kann es jedoch zu undefinierten Verzögerungen bei der Weiterleitung von Datenpaketen zwischen den Switches 501 und 502 kommen, was wiederum die Funktion der Zeitsynchronisation zwischen den Uhren 901 und 902 stören kann. Mit der Implementierung eines Transparent-Clock-Verfahrens im Gerät 100 könnte auch in dem zuvor geschilderten Fall die Funktion der Zeitsynchronisation zwischen den Uhren 901 und 902 gesichert werden. Wie zuvor beschrieben, ist eine Implementierung eines Transparent-Clock-Verfahrens jedoch verhältnismäßig aufwändig.

Aufgabe der vorliegenden Erfindung ist es daher, ein Verfahren zur Datenübertragung für beispielsweise das Gerät 100 bereitzustellen, welches mit geringem Aufwand realisiert werden kann und die Funktion der Zeitsynchronisation zwischen den Uhren 901 und 902 nicht stört.

Diese Aufgabe wird gemäß der vorliegenden Erfindung durch ein Verfahren zur Datenübertragung über eine Kommunikationsvorrichtung nach Anspruch 1 und eine Kommunikationsvorrichtung nach Anspruch 10 gelöst. Die abhängigen Ansprüche definieren bevorzugte und vorteilhafte Ausführungsformen der Erfindung.

Gemäß der vorliegenden Erfindung wird ein Verfahren zur Datenübertragung über eine Kommunikationsvorrichtung bereitgestellt. Die Kommunikationsvorrichtung ist in der Lage, Daten über einen Eingang der Kommunikationsvorrichtung zu empfangen und die über den Eingang empfangenen Daten über einen Ausgang der Kommunikationsvorrichtung auszugeben. Ferner ist die Kommunikationsvorrichtung ausgestaltet, zusätzliche Daten über den Ausgang auszugeben. Die zusätzlichen Daten können beispielsweise Daten umfassen, welche nicht über den Eingang empfangen wurden, sondern beispielsweise von der Kommunikationsvorrichtung selbst erzeugt wurden. Bei dem Verfahren werden die Daten über den Eingang empfangen und in einem Datenzwischenspeicher zwischengespeichert. Der Datenzwischenspeicher weist eine vorbestimmte Größe auf. Der Datenzwischenspeicher kann beispielsweise eine Größe aufweisen, welche es der Kommunikationsvorrichtung ermöglicht, komplette Datenpakete, welche in einem mit der Kommunikationsvorrichtung verbundenen Datennetz übertragen werden, zwischenzuspeichern. Bei üblichen Datenübertragungsnetzen ist die Größe von Datenpaketen üblicherweise auf eine bestimmte Größe begrenzt. Der Datenzwischenspeicher kann beispielsweise eine derartige Größe aufweisen, dass Datenpakete dieser maximalen Größe darin zwischengespeichert werden können. Der Datenzwischenspeicher kann beispielsweise von der Art eines sogenannten FIFO-Zwischenspeichers ausgestaltet sein (first in first out), d.h., die Daten, welche in dem Zwischenspeicher eingegeben werden, werden in der gleichen Reihenfolge wieder aus dem Zwischenspeicher ausgegeben. Der Zwischenspeicher kann die Daten beispielsweise mit einem vorgegebenen Takt einspeichern und ausgeben. Bei dem Verfahren werden die zwischengespeicherten Daten über den Ausgang ausgegeben. Weiterhin wird bei dem Verfahren eine Größe eines von den empfangenen Daten nicht benutzten Datenbereichs in dem Datenzwischenspeicher bestimmt. Anders ausgedrückt wird eine Größe eines derzeit freien Datenbereichs in dem Datenzwischenspeicher bestimmt, wobei dieser Datenbereich derzeit nicht von den empfangenen Daten benutzt wird und somit unbenutzt ist. Die zusätzlichen Daten, also beispielsweise die von der Kommunikationsvorrichtung selbst erzeugten Daten, werden in Abhängigkeit von der Größe des von den empfangenen Daten nicht benutzten Datenbereichs ausgegeben. Anders ausgedrückt wird eine Größe einer Lücke in einem Datenstrom der empfangenen Daten bestimmt und in Abhängigkeit von der Größe dieser Lücke in dem Datenstrom werden die zusätzlichen Daten über den Ausgang ausgegeben. Indem die über den Eingang empfangenen Daten zunächst in dem Zwischenspeicher zwischengespeichert oder gepuffert werden, kann auf einfache Art und Weise bestimmt werden, ob in den empfangenen Daten eine Datenlücke vorhanden ist, welche groß genug ist, um die zusätzlichen Daten während dieser Datenlücke über den Ausgang auszugeben. Indem die empfangenen Daten grundsätzlich in dem Zwischenspeicher zwischengespeichert werden und der Zwischenspeicher eine vorbestimmte Größe aufweist, können die empfangenen Daten für eine vorbestimmte Zeit genau verzögert werden, bevor sie über den Ausgang ausgegeben werden. Bei dem unter Bezugnahme auf die Fig. 1-3 zuvor beschriebenen Synchronisationsverfahren kann daher sichergestellt werden, dass die Laufzeiten von Daten durch die Kommunikationsvorrichtung, welche beispielsweise das Gerät 100 sein kann, konstant sind. Dadurch wird das Synchronisationsverfahren auch dann nicht gestört, wenn die zusätzlichen Daten über den Ausgang der Kommunikationsvorrichtung ausgegeben werden.

Gemäß einer Ausführungsform umfasst das Bestimmen der Größe des von den empfangenen Daten nicht genutzten Datenbereichs ein Bestimmen, ob der Datenzwischenspeicher leer ist. Anders ausgedrückt wird bei dieser Ausführungsform bestimmt, ob der Datenzwischenspeicher leer ist und in Abhängigkeit davon, ob er leer ist oder nicht, werden die zusätzlichen Daten über den Ausgang ausgegeben. Der Datenzwischenspeicher kann beispielsweise so dimensioniert sein, dass er zur Speicherung eines in dem Kommunikationsnetzwerk größtmöglichen Datenpakets geeignet ist. Alternativ kann der Datenzwischenspeicher so dimensioniert sein, dass er ein Datenpaket bestehend aus den zusätzlichen Daten mit einer maximalen Größe speichern könnte. Wenn der Datenzwischenspeicher leer ist, ist somit eine ausreichend große Datenlücke in den über den Eingang empfangenen Daten vorhanden, um die zusätzlichen Daten über den Ausgang ausgeben zu können, ohne dass diese Ausgabe mit der Ausgabe von über den Eingang empfangenen Daten kollidiert. Dadurch kann sichergestellt werden, dass die über den Eingang empfangenen Daten immer mit der gleichen Verzögerung am Ausgang ausgegeben werden und somit die Laufzeit der Daten durch die Kommunikationsvorrichtung konstant ist.

Gemäß einer weiteren Ausführungsform werden die empfangenen Daten beim Zwischenspeichern mit einer vorbestimmten Geschwindigkeit durch den Datenzwischenspeicher geleitet. Indem die empfangenen Daten mit der vorbestimmten Geschwindigkeit durch den Datenzwischenspeicher mit vorbestimmter Größe geleitet werden bevor sie am Ausgang ausgegeben werden, werden die Daten um eine definierte Zeit verzögert, so dass die Laufzeiten der Daten durch die Kommunikationsvorrichtung konstant sind und somit das zuvor beschriebene Synchronisationsverfahren durch die Kommunikationsvorrichtung nicht gestört wird.

Mit einer weiteren Ausführungsform werden die empfangenen Daten für eine genau vorbestimmte Zeit in dem Datenzwischenspeicher zwischengespeichert. Dadurch ist die Laufzeit der Daten durch die Kommunikationsvorrichtung konstant und das eingangs beschriebene Zeitsynchronisationsverfahren kann in einem Kommunikationsnetz, welches die Kommunikationsvorrichtung umfasst, ungestört durchgeführt werden.

Gemäß einer weiteren Ausführungsform umfassen die Daten Datenpakete, wobei jedes Datenpaket mehrere Dateneinheiten umfasst. Als Dateneinheiten kann das Datenpaket beispielsweise mehrere Bits oder Bytes umfassen. Beim Zwischenspeichern der empfangenen Daten wird jede Dateneinheit für eine genau vorbestimmte Zeit zwischengespeichert. Somit können beispielsweise die Daten eines Datenpakets bitsynchron oder bytesynchron in den Datenzwischenspeicher eingetaktet und aus dem Datenzwischenspeicher ausgelesen werden, so dass eine Übertragung von beispielsweise Synchronisationspaketen einer Zeitsynchronisation durch die Kommunikationsvorrichtung transparent und mit konstanter Laufzeit erfolgt.

Gemäß einer weiteren Ausführungsform werden die zusätzlichen Daten in einem zusätzlichen Datenzwischenspeicher zwischengespeichert, bevor die zusätzlichen Daten über den Ausgang ausgegeben werden. Die zusätzlichen Daten können beispielsweise in Form von Datenpaketen vorliegen. In dem zusätzlichen Datenzwischenspeicher kann somit beispielsweise ein Datenpaket der zusätzlichen Daten oder es können mehrere Datenpakete der zusätzlichen Daten zwischengespeichert werden. Durch das Zwischenspeichern der zusätzlichen Daten kann eine benötigte Datenlücke in dem Datenstrom vom Eingang zum Ausgang ermittelt werden, welche benötigt wird, um ein Datenpaket der zusätzlichen Daten derart in den Datenfluss zwischen dem Eingang und dem Ausgang einzufügen, dass keine Kollision mit den Daten vom Eingang entsteht. Dadurch können die zusätzlichen Daten zuverlässig in den Datenstrom zwischen dem Eingang und dem Ausgang eingefügt werden, ohne die Durchlaufzeit der Daten vom Eingang zum Ausgang zu beeinflussen.

Gemäß einer weiteren Ausführungsform ist die Kommunikationsvorrichtung in der Lage, weitere Daten über einen weiteren Eingang der Kommunikationsvorrichtung zu empfangen und die über den weiteren Eingang empfangenen weiteren Daten über einen weiteren Ausgang der Kommunikationsvorrichtung auszugeben. Ferner ist die Kommunikationsvorrichtung ausgestaltet, weitere zusätzliche Daten über den weiteren Ausgang auszugeben. Bei dieser Ausführungsform werden die weiteren Daten über den weiteren Eingang empfangen und die über den weiteren Eingang empfangenen weiteren Daten in einem weiteren Datenzwischenspeicher zwischengespeichert. Der weitere Datenzwischenspeicher hat eine Größe, welche gleich der vorbestimmten Größe des Datenzwischenspeichers ist. Die in dem weiteren Datenzwischenspeicher zwischengespeicherten Daten werden über den weiteren Ausgang ausgegeben. Eine Größe eines von den empfangenen weiteren Daten nicht benutzten Datenbereichs in dem weiteren Datenzwischenspeicher wird bestimmt und in Abhängigkeit von der Größe des von den weiteren empfangenen Daten nicht benutzten Datenbereichs in dem weiteren Datenzwischenspeicher werden die weiteren zusätzlichen Daten über den weiteren Ausgang ausgegeben. Somit können zwei unabhängige Datenströme von der Kommunikationsvorrichtung verarbeitet werden. Die beiden unabhängigen Datenströme können beispielsweise eine bidirektionale Kommunikation in einem Kommunikationsnetz unterstützen. Die zusätzlichen Daten bzw. die weiteren zusätzlichen Daten können beispielsweise von der Kommunikationsvorrichtung erzeugte Daten umfassen und in eine beliebige Richtung der bidirektionalen Kommunikation eingespeist werden, sofern sich in der entsprechenden Richtung der durchzuleitenden Daten eine entsprechende Lücke ergibt. Indem die zusätzlichen Daten bzw. die weiteren zusätzlichen Daten in Lücken des durchzuleitenden Datenstroms eingefügt werden, sind die Laufzeiten der durchzuleitenden Daten konstant. Indem der Datenzwischenspeicher und der weitere Datenzwischenspeicher eine gleiche Größe aufweisen, sind die Laufzeiten in beide Richtungen konstant und somit symmetrisch, so dass eine Verzögerung eines Datentransports durch die Kommunikationsvorrichtung in jeder Richtung mit konstanter und gleicher Laufzeit erfolgt. Dadurch kann die Kommunikationsvorrichtung in beispielsweise das in Verbindung mit Fig. 1-3 beschriebene Kommunikationsnetz eingefügt werden, ohne dass Synchronisationsverfahren zwischen den Uhren zu beeinflussen.

Gemäß der vorliegenden Erfindung wird weiterhin eine Kommunikationsvorrichtung bereitgestellt, welche einen Eingang zum Empfangen von Daten, einen Ausgang zum Ausgeben von Daten, einen Datenzwischenspeicher mit einer vorbestimmten Größe und eine Steuervorrichtung umfasst. Die Steuervorrichtung ist ausgestaltet, über den Eingang Daten zu empfangen und in dem Zwischenspeicher zwischenzuspeichern. Ferner ist die Steuervorrichtung in der Lage, die in dem Datenzwischenspeicher zwischengespeicherten Daten über den Ausgang auszugeben. Weiterhin bestimmt die Steuervorrichtung eine Größe eines von den empfangenen Daten in den Datenzwischenspeicher nicht genutzten Datenbereichs und gibt in Abhängigkeit von der so bestimmten Größe des unbenutzten Datenbereichs in dem Datenzwischenspeicher zusätzliche Daten über den Ausgang aus. Die Kommunikationsvorrichtung ist somit zur Durchführung des zuvor beschriebenen Verfahrens oder einer seiner Ausführungsformen ausgestaltet und umfasst daher auch die im Zusammenhang mit den zuvor beschriebenen Verfahren beschriebenen Vorteile.

Die vorliegende Erfindung wird nachfolgend unter Bezugnahme auf die Zeichnungen anhand bevorzugter Ausführungsformen erläutert werden.
Fig. 1 zeigt schematisch ein Kommunikationsnetzwerk mit zwei Uhren, welche über ein Zeitsynchronisationsverfahren miteinander synchronisiert werden können.
Fig. 2 zeigt das Kommunikationsnetzwerk der Fig. 1 mit einem in eine Kommunikationsverbindung eingekoppelten Gerät.
Fig. 3 zeigt das Kommunikationsnetzwerk der Fig. 2, wobei das eingekoppelte Gerät über eine abgesetzte Steuervorrichtung gesteuert wird.
Fig. 4 zeigt schematisch eine Kommunikationsvorrichtung gemäß einer Ausführungsform der vorliegenden Erfindung.
Fig. 5 zeigt Verfahrensschritte eines Verfahrens zur Datenübertragung über eine Kommunikationsvorrichtung gemäß einer Ausführungsform der vorliegenden Erfindung.

Fig. 4 zeigt eine Kommunikationsvorrichtung 100, welche beispielsweise in dem Kommunikationsnetzwerk der Fig. 3 als das Gerät 100 eingesetzt werden kann. Die Kommunikationsvorrichtung 100 umfasst zwei bidirektionale Anschlüsse oder Ports A, B, welche mit Kommunikationsverbindungen 500 verbunden sind. Wie in Fig. 3 gezeigt ist, kann der Anschluss A beispielsweise über die Kommunikationsverbindung 500 mit dem Switch 501 gekoppelt sein und der Anschluss B kann über die Verbindung 500 mit dem Switch 502 gekoppelt sein. Die Kommunikationsvorrichtung 100 leitet somit Daten, insbesondere Datenpakete, zwischen den Switches 501 und 502 in beide Richtungen weiter. Die Anschlüsse A, B werden daher auch als Inline-Ports bezeichnet. Der Anschluss A umfasst einen Empfangsabschnitt Rx und einen Sendeabschnitt Tx. Der Empfangsabschnitt Rx ist mit einem Empfangspuffer oder Zwischenspeicher 110 gekoppelt. Der Zwischenspeicher 110 ist mit einer Steuereinheit 120 gekoppelt, welche mit einem Sendeabschnitt Tx des Anschlusses B gekoppelt ist. Der Zwischenspeicher 110 ist ferner mit einer Funktionseinheit 190 der Kommunikationsvorrichtung 100 gekoppelt. Die Funktionseinheit 190 realisiert und steuert Funktionen der Kommunikationsvorrichtung 100. Beispielsweise kann die Funktionseinheit 190 einen Datenverkehr auf der Verbindung 500 überwachen und Datenpakete mit Ergebnissen dieser Überwachung erzeugen. Ferner kann die Funktionseinheit 190 mit beispielsweise Datenpaketen von dem Computersystem 300 der Fig. 3 gesteuert oder konfiguriert werden. Zum Empfangen von Datenpaketen von dem Computersystem 300 ist die Funktionseinheit 190 mit dem Empfangspuffer 110 verbunden und kann selbst erzeugte Datenpakete über einen Sendepuffer oder Zwischenspeicher 130 an die Steuereinheit 120 ausgeben.

Für Datenverkehr in der Gegenrichtung umfasst die Kommunikationsvorrichtung 100 entsprechende Komponenten. Am Anschluss B umfasst die Kommunikationsvorrichtung 100 einen Empfangsabschnitt Rx und einen Sendeabschnitt Tx. Der Empfangsabschnitt Rx ist mit einem Empfangspuffer oder Zwischenspeicher 111 gekoppelt. Der Zwischenspeicher 111 ist mit einer Steuereinheit 121 gekoppelt, welche mit dem Sendeabschnitt Tx des Anschlusses A gekoppelt ist. Zusätzlich ist der Zwischenspeicher 111 mit der Funktionseinheit 190 gekoppelt und die Funktionseinheit 190 ist mit einem weiteren Sendepuffer oder Zwischenspeicher 131 zum Ausgeben von Datenpaketen gekoppelt, welcher mit der Steuereinheit 121 verbunden ist.

Die Zwischenspeicher 110 und 111 weisen eine vorbestimmte Größe auf. Daten, welche von den Empfangsabschnitten Rx empfangen werden und in die Zwischenspeicher 110 bzw. 111 eingegeben werden, werden dort beispielsweise zeitsynchron eingetaktet und nach einer Zwischenspeicherung zeitsynchron ausgetaktet und zu den entsprechenden Steuereinheiten 120 bzw. 121 ausgegeben. Die Steuereinheiten 120 bzw. 121 leiten die Daten wiederum zu den entsprechenden Sendeabschnitten Tx weiter. Dadurch wird eine Datenweiterleitung durch die Kommunikationsvorrichtung 100 vom Anschluss A zum Anschluss B und in umgekehrter Richtung vom Anschluss B zum Anschluss A um eine definierte Zeit verzögert, welche von der Größe der Zwischenspeicher 110 bzw. 111 und der Datenrate, mit welcher die Daten in die Zwischenspeicher 110 bzw. 111 eingespeichert werden, abhängt. Durch die konstante Verzögerung ist eine Laufzeit eines Datenpakets durch die Kommunikationsvorrichtung 100 wohl definiert und konstant. Dadurch kann ein Synchronisationsverfahren zwischen den Uhren 901 und 902 der Fig. 3 auf einfache Art und Weise beispielsweise gemäß der Norm IEEE 1588 durchgeführt werden.

Datenpakete, welche über die Anschlüsse A oder B empfangen werden und welche für die Funktionseinheit 190 bestimmt sind, können ebenfalls in den Zwischenspeichern 110 und 111 zwischengespeichert werden und dann an die Funktionseinheit 190 weitergeleitet werden. Datenpakete, welche die Funktionseinheit 190 wahlweise über einen oder beide der Anschlüsse A und B aussenden möchte, werden zunächst in den Zwischenspeicher 130 bzw. 131 gespeichert. Die Steuereinheit 120 bzw. 121 überwacht die Größe eines in dem entsprechenden Zwischenspeicher 110 bzw. 111 nicht benutzten Datenbereichs. Anders ausgedrückt überwacht die Steuereinheit 120 bzw. 121 in dem ihr zugeordneten Zwischenspeicher 110 bzw. 111, ob darin eine Datenlücke in den durchzuleitenden Daten vorhanden ist. Wenn die Steuereinheit 120 bzw. 121 eine entsprechende Datenlücke in dem entsprechenden Zwischenspeicher 110 bzw. 111 findet, wird diese Lücke genutzt, um Daten aus dem Zwischenspeicher 130 bzw. 131 zu senden.

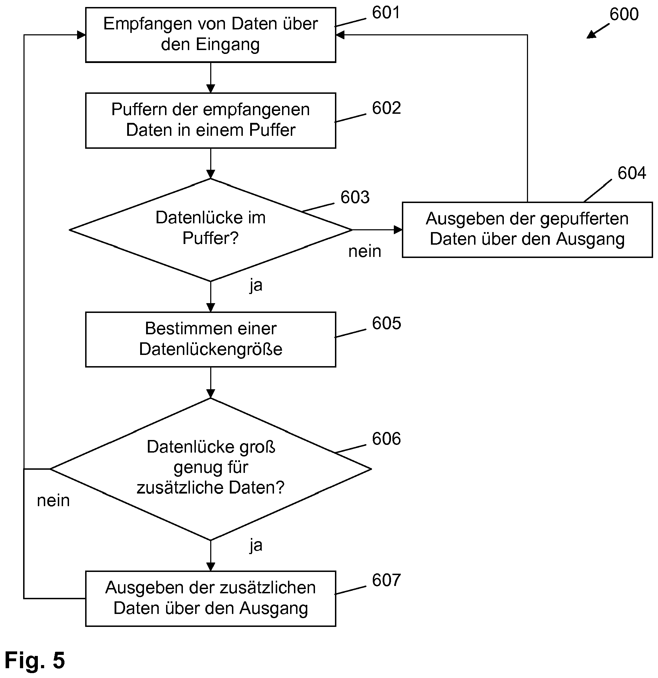

Zusammenfassend wird nachfolgend die Arbeitsweise der Kommunikationsvorrichtung 100 unter Bezugnahme auf ein Ablaufdiagram 600 der Fig. 5 beschrieben werden. Die auf den Anschlüssen oder Inline Ports A und B ankommenden Datenpakete werden im Schritt 601 empfangen und im Schritt 602 in einem dem Anschluss zugeordneten Zwischenspeicher 110, 111 gepuffert. Ein ankommendes Datenpaket muss somit diesen Zwischenspeicher durchlaufen, bevor es zum anderen Anschluss oder Inline Port zur neuerlichen Aussendung weitergeleitet wird. Im Schritt 603 wird überprüft, ob in dem Zwischenspeicher oder Puffer 110 bzw. 111 eine Datenlücke vorliegt. Wenn keine Datenlücke vorliegt werden die in dem Zwischenspeicher 110, 111 gepufferten Daten im Schritt 604 über den Ausgang ausgegeben. Wenn im Schritt 603 eine Datenlücke gefunden wird, wird die Größe der Datenlücke im Schritt 605 bestimmt. Dies kann beispielsweise dadurch geschehen, dass überprüft, ob der Zwischenspeicher 110 bzw. 111 leer ist. In diesem Fall besteht eine Datenlücke in dem Datenstrom, welche mindestens so groß wie der Zwischenspeicher 110 bzw. 111 ist. Wenn beispielsweise der Zwischenspeicher 110 leer ist, ist sichergestellt, dass kein Datenpaket von dem Anschluss A zu dem Anschluss B weiterzuleiten ist, bevor der Zwischenspeicher von einem weiteren über den Anschluss A ankommenden Datenpaket aufgefüllt wird. Damit besteht die Möglichkeit, dass ein von der Funktionseinheit 190 erzeugtes Datenpaket auf dem Anschluss B ausgesendet werden kann. Dazu ist sicherzustellen, dass das Versenden des Datenpakets von der Funktionseinheit 190 abgeschlossen ist, bevor der Empfangspuffer 110 wieder aufgefüllt ist. Anders ausgedrückt darf das von der Funktionseinheit 190 erzeugte Datenpaket maximal so groß sein, wie die Lücke im Datenstrom oder (bei leerem Zwischenspeicher 110) wie die Größe des Zwischenspeichers 110. Dies kann beispielsweise durch die Funktionseinheit 190 sichergestellt werden. Alternativ kann die Datenlücke auch beispielsweise Byte-genau in dem Zwischenspeicher 110 bzw. 111 durch die Steuereinheiten 120 und 121 bestimmt werden. Wenn im Schritt 606 festgestellt wird, dass die Datenlücke groß genug für die Daten der Funktionseinheit 190 ist, werden im Schritt 607 die Daten der Funktionseinheit 190 über den Anschluss B ausgegeben. Wenn im Schritt 606 festgestellt wird, dass die Datenlücke in dem Datenstrom nicht groß genug ist, werden keine Daten von der Funktionseinheit 190 ausgegeben, sondern das Verfahren in Schritt 601 mit dem Empfang von weiteren Daten von den Eingängen A, B fortgesetzt.

Mit der zuvor beschriebenen Kommunikationsvorrichtung 100 wird eine konstante Durchlaufzeit für die weiterzuleitenden Datenpakete erreicht. Aus Sicht der Switches 501 und 502 bzw. aus Sicht der Systeme, welche die Uhren 901 und 902 beinhalten, kann diese konstante Durchlaufzeit als eine beträchtliche Leitungslänge angesehen werden. Die Durchlaufzeit durch die Kommunikationsvorrichtung 100 ist unabhängig davon, ob in den Lücken des Datenstroms auf der Verbindung 500 zwischen den Switches 501 und 502 Pakete von der Funktionseinheit 190 eingespeist werden oder nicht. Somit kann die Durchlaufzeit von Datenpaketen zwischen den Anschlüssen A und B der Kommunikationsvorrichtung 100 weiterhin von einem Zeitsynchronisationsmechanismus kompensiert werden, so dass eine Synchronisation der Uhren 901 und 902 auf einfache Art und Weise ermöglicht wird.

Wie zuvor beschrieben, bestimmt die Größe der Zwischenspeicher 110 und 111 die maximale Größe der Datenpakete, welche von der Funktionseinheit 190 ausgegeben werden können. Der Zwischenspeicher 110, 111 kann nicht kleiner sein als die minimale Paketgröße der verwendeten Netzwerktechnologie. Nach oben bestehen jedoch keine theoretischen Einschränkungen für die Größe der Zwischenspeicher 110, 111. Praktische Überlegungen setzen hier jedoch Grenzen, da einerseits die Durchlaufzeit mit der Größe der Zwischenspeicher 110, 111 ansteigt und andererseits die Wahrscheinlichkeit für das Eintreten der Bedingung, dass der Zwischenspeicher leer ist, sinkt.

Für den (wahrscheinlichen) Fall, dass viele der Datenpakete, welche von der Funktionseinheit 190 erzeugt werden, nicht so groß wie die Größe der Zwischenspeicher 110, 111 sind, kann das Verfahren, wie zuvor bereits angedeutet, optimiert werden. Dazu wird nicht in jedem Fall abgewartet, bis der entsprechende Zwischenspeicher 110, 111 völlig leer ist, sondern es wird nach einer Lücke im Datenstrom gesucht, welche gleich groß oder größer ist als das nächste Datenpaket, welches von der Funktionseinheit 190 zum Versand in den entsprechenden Zwischenspeicher 130, 131 ausgegeben wurde. Sobald beispielsweise die Steuereinheit 120 in dem Zwischenspeicher 110 eine Lücke entdeckt hat, gibt die Steuereinheit 120 Daten des Zwischenspeichers 110 über den Sendeabschnitt Tx des Anschlusses B aus, bis die Datenlücke in den Zwischenspeicher 110 vorgerückt ist und somit zunächst keine Daten von dem Zwischenspeicher 110 auszugeben sind. Dann gibt die Steuereinheit 120 Daten der Funktionseinheit 190 aus dem Zwischenspeicher 130 aus, sofern die in dem Zwischenspeicher 110 gefundene Lücke ausreichend groß ist, um ein vollständiges Datenpaket aus dem Zwischenspeicher 130 über den Ausgangsabschnitt Tx des Anschlusses B auszugeben. Wenn die Lücke in dem Zwischenspeicher 110 ausreichend groß ist, können gegebenenfalls auch mehrere Datenpakete aus dem Zwischenspeicher 130 nacheinander über den Anschluss B ausgegeben werden.

Obwohl das zuvor beschriebene Verfahren in Verbindung mit einem Ethernet-basierten Datennetz beschrieben wurde, ist das Verfahren in einem beliebigen anderen Datennetz verwendbar.

## Patentansprüche

1. Verfahren zur Datenübertragung über eine Kommunikationsvorrichtung, wobei die Kommunikationsvorrichtung (100) ausgestaltet ist, Daten über einen Eingang (Rx, A) der Kommunikationsvorrichtung (100) zu empfangen, die über den Eingang (Rx, A) empfangenen Daten über einen Ausgang (Tx, B) der Kommunikationsvorrichtung (100) auszugeben und zusätzliche Daten über den Ausgang (Tx, B) auszugeben, wobei das Verfahren umfasst:
- Empfangen der Daten über den Eingang (Rx, A),
- Zwischenspeichern der über den Eingang (Rx, A) empfangenen Daten in einem Datenzwischenspeicher (110) mit einer vorbestimmten Größe,
- Ausgeben der zwischengespeicherten Daten über den Ausgang (Tx, B),
- Bestimmen einer Größe eines von den empfangenen Daten nicht benutzten Datenbereichs in dem Datenzwischenspeicher (110), und
- Ausgeben der zusätzlichen Daten über den Ausgang (Tx, B) in Abhängigkeit von der Größe des von den empfangenen Daten nicht benutzten Datenbereichs in dem Datenzwischenspeicher (110).

2. Verfahren nach Anspruch 1, wobei das Bestimmen der Größe des von den empfangenen Daten nicht benutzten Datenbereichs ein Bestimmen, ob der Datenzwischenspeicher (110) leer ist, umfasst.

3. Verfahren nach Anspruch 1 oder 2, wobei das Zwischenspeichern der empfangenen Daten ein Leiten der empfangenen Daten mit einer vorbestimmten Geschwindigkeit durch den Datenzwischenspeicher (110) umfasst.

4. Verfahren nach einem der vorhergehenden Ansprüche, wobei das Zwischenspeichern der empfangenen Daten ein Zwischenspeichern der empfangenen Daten in dem Datenzwischenspeicher (110) für eine genau vorbestimmte Zeit umfasst.

5. Verfahren nach einem der vorhergehenden Ansprüche, wobei die zusätzlichen Daten Daten umfassen, welche nicht über den Eingang (Rx, A) empfangen wurden.

6. Verfahren nach einem der vorhergehenden Ansprüche, wobei die zusätzlichen Daten Daten umfassen, welche von der Kommunikationsvorrichtung (100) erzeugt wurden.

7. Verfahren nach einem der vorhergehenden Ansprüche, wobei die Daten Datenpakete umfassen, wobei jedes Datenpaket mehrere Dateneinheiten umfasst, wobei das Zwischenspeichern der empfangenen Daten ein Zwischenspeichern einer jeden Dateneinheit für eine genau vorbestimmte Zeit umfasst.

8. Verfahren nach einem der vorhergehenden Ansprüche, wobei die zusätzlichen Daten über den Ausgang (Tx, B) ausgegeben werden, wenn die Größe des von den empfangenen Daten nicht benutzten Datenbereichs in dem Datenzwischenspeicher (110) größer oder gleich der Größe einer Datenmenge der zusätzlichen Daten ist.

9. Verfahren nach einem der vorhergehenden Ansprüche, wobei die Kommunikationsvorrichtung (100) ausgestaltet ist, weitere Daten über einen weiteren Eingang (Rx, B) der Kommunikationsvorrichtung (100) zu empfangen, die über den weiteren Eingang (Rx, B) empfangenen weiteren Daten über einen weiteren Ausgang (Tx, A) der Kommunikationsvorrichtung (100) auszugeben und weitere zusätzliche Daten über den weiteren Ausgang (Tx, A) auszugeben, wobei das Verfahren umfasst:
- Empfangen der weiteren Daten über den weiteren Eingang (Rx, B),
- Zwischenspeichern der über den weiteren Eingang (Rx, B) empfangenen weiteren Daten in einem weiteren Datenzwischenspeicher (111) mit einer Größe, welche gleich der vorbestimmten Größe des Datenzwischenspeichers (110) ist,
- Ausgeben der in dem weiteren Datenzwischenspeicher (111) zwischengespeicherten Daten über den weiteren Ausgang (Tx, A),
- Bestimmen einer Größe eines von den empfangenen weiteren Daten nicht benutzten Datenbereichs in dem weiteren Datenzwischenspeicher (111), und
- Ausgeben der weiteren zusätzlichen Daten über den weiteren Ausgang (Tx, A) in Abhängigkeit von der Größe des von den weiteren empfangenen Daten nicht benutzten Datenbereichs in dem weiteren Datenzwischenspeicher (111).

10. Kommunikationsvorrichtung umfassend:
- einen Eingang (Rx, A) zum Empfangen von Daten
- einen Ausgang (Tx, B) zum Ausgeben von Daten,
- einen Datenzwischenspeicher (110) mit einer vorbestimmten Größe, und
- eine Steuervorrichtung (120), welche ausgestaltet ist, über den Eingang (Rx, A) empfangene Daten in dem Datenzwischenspeicher (110) zwischenzuspeichern, die in dem Datenzwischenspeicher (110) zwischengespeicherten Daten über den Ausgang (Tx, B) auszugeben, eine Größe eines von den empfangenen Daten nicht benutzten Datenbereichs in dem Datenzwischenspeicher (110) zu bestimmen, und zusätzliche Daten über den Ausgang (Tx, B) in Abhängigkeit von der Größe des von den empfangenen Daten nicht benutzten Datenbereichs in dem Datenzwischenspeicher (110) auszugeben.

11. Kommunikationsvorrichtung nach Anspruch 10, wobei die Kommunikationsvorrichtung (100) zur Durchführung des Verfahrens nach einem der Ansprüche 1-9 ausgestaltet ist.

## Claims

1. Method for data transfer via a communication device, wherein the communication device (100) is configured to receive data via an input (Rx, A) of the communication device (100), to output the data received via the input (Rx, A) via an output (Tx, B) of the communication device (100), and to output additional data via the output (Tx, B), the method comprising:
- receiving the data via the input (Rx, A),
- storing temporarily the data received via the input (Rx, A) in an intermediate data memory (110) with a predetermined size,
- outputting the data stored temporarily via the output (Tx, B),
- determining a size of a data area not used by the received data in the intermediate data memory (110), and
- outputting the additional data via the output (Tx, B) in a manner depending on the size of the data area not used by the received data in the intermediate data memory (110).

2. Method according to claim 1, wherein the determining of the size of the data area not used by the received data comprises determining whether the intermediate data memory (110) is empty.

3. Method according to claim 1 or claim 2, wherein the temporarily storing of the received data comprises routing the received data through the intermediate data memory (110) at a predetermined speed.

4. Method according to any one of the preceding claims, wherein the temporarily storing of the received data comprises storing temporarily the received data in the intermediate data memory (110) for a precisely predetermined time.

5. Method according to any one of the preceding claims, wherein the additional data comprise data that were not received via the input (Rx, A).

6. Method according to any one of the preceding claims, wherein the additional data comprise data that were generated by the communication device (100).

7. Method according to any one of the preceding claims, wherein the data comprise data packets, each data packet comprising several data units, wherein the temporarily storing of the received data comprises storing temporarily each data unit for a precisely predetermined time.

8. Method according to any one of the preceding claims, wherein the additional data are output via the output (Tx, B) if the size of the data area not used by the received data in the intermediate data memory (110) is larger than or equal to the size of an amount of data of the additional data.

9. Method according to any one of the preceding claims, wherein the communication device (100) is configured to receive further data via a further input (Rx, B) of the communication device (100), to output the further data received via the further input (Rx, B) via a further output (Tx, A) of the communication device (100), and to output further additional data via the further output (Tx, A), the method comprising:
- receiving the further data via the further input (Rx, B),
- storing temporarily the further data received via the further input (Rx, B) in a further intermediate data memory (111) with a size that is equal to the predetermined size of the intermediate data memory (110),
- outputting the data stored temporarily in the further intermediate data memory (111) via the further output (Tx, A),
- determining a size of a data area not used by the received further data in the further intermediate data memory (111), and
- outputting the further additional data via the further output (Tx, A) in a manner depending on the size of the data area not used by the further received data in the further intermediate data memory (111).

10. Communication device comprising:
- an input (Rx, A) for receiving data,
- an output (Tx, B) for outputting data,
- an intermediate data memory (110) with a predetermined size, and
- a control device (120) which is configured to store temporarily data received via the input (Rx, A) in the intermediate data memory (110), to output the data stored temporarily in the intermediate data memory (110) via the output (Tx, B), to determine a size of a data area not used by the received data in the intermediate data memory (110), and to output additional data via the output (Tx, B) in a manner depending on the size of the data area not used by the received data in the intermediate data memory (110).

11. Communication device according to claim 10, wherein the communication device (100) is configured to perform the method according to any one of claims 1-9.

## Revendications

1. Procédé servant à la transmission de données via un dispositif de communication, dans lequel le dispositif de communication (100) est agencé pour recevoir des données via une entrée (Rx, A) du dispositif de communication (100), pour délivrer les données reçues via l'entrée (Rx, A) via une sortie (Tx, B) du dispositif de communication (100) et pour délivrer des données supplémentaires via la sortie (Tx, B), dans lequel le procédé comprend :
- la réception des données via l'entrée (Rx, A),
- le stockage temporaire des données reçues via l'entrée (Rx, A) dans une mémoire temporaire de données (110) ayant une taille prédéterminée,
- la délivrance des données temporairement stockées via la sortie (Tx, B),
- la détermination d'une taille d'une zone de données, non utilisée par les données reçues, dans la mémoire temporaire de données (110), et
- la délivrance des données supplémentaires via la sortie (Tx, B) en fonction de la taille de la zone de données, non utilisée par les données reçues, dans la mémoire temporaire de données (110).

2. Procédé selon la revendication 1, dans lequel la détermination de la taille de la zone de données, non utilisée par les données reçues, consiste à déterminer si la mémoire temporaire de données (110) est vide.

3. Procédé selon la revendication 1 ou 2, dans lequel le stockage temporaire des données reçues comprend un guidage des données reçues avec une vitesse prédéterminée à travers la mémoire temporaire de données (110).

4. Procédé selon l'une quelconque des revendications précédentes, dans lequel le stockage temporaire des données reçues comprend un stockage temporaire des données reçues dans la mémoire temporaire de données (110) pendant un temps exactement prédéterminé.

5. Procédé selon l'une quelconque des revendications précédentes, dans lequel les données supplémentaires comprennent des données qui n'ont pas été reçues via l'entrée (Rx, A).

6. Procédé selon l'une quelconque des revendications précédentes, dans lequel les données supplémentaires comprennent des données qui ont été générées par le dispositif de communication (100).

7. Procédé selon l'une quelconque des revendications précédentes, dans lequel les données comprennent des paquets de données, dans lequel chaque paquet de données comprend plusieurs unités de données, dans lequel le stockage temporaire des données reçues comprend un stockage temporaire de chaque unité de données pendant un temps exactement prédéterminé.

8. Procédé selon l'une quelconque des revendications précédentes, dans lequel les données supplémentaires sont délivrées via la sortie (Tx, B) lorsque la taille de la zone de données, non utilisée par les données reçues, dans la mémoire temporaire de données (110) est supérieure ou égale à la taille d'une quantité de données des données supplémentaires.

9. Procédé selon l'une quelconque des revendications précédentes, dans lequel le dispositif de communication (100) est agencé pour recevoir d'autres données via une autre entrée (Rx, B) du dispositif de communication (100), pour délivrer les autres données reçues via l'autre entrée (Rx, B) via une autre sortie (Tx, A) du dispositif de communication (100) et pour délivrer d'autres données supplémentaires via l'autre sortie (Tx, A), dans lequel le procédé comprend :
- la réception d'autres données via l'autre entrée (Rx, B),
- le stockage temporaire des autres données reçues via l'autre entrée (Rx, B) dans une autre mémoire temporaire de données (111) ayant une taille qui est identique à la taille prédéterminée de la mémoire temporaire de données (110),
- la délivrance des données temporairement stockées dans l'autre mémoire temporaire de données (111) via l'autre sortie (Tx, A),
- la détermination d'une taille d'une zone de données, non utilisée par les autres données reçues, dans l'autre mémoire temporaire de données (111), et
- la délivrance des autres données supplémentaires via l'autre sortie (Tx, A) en fonction de la taille de la zone de données, non utilisée par les données reçues, dans l'autre mémoire temporaire de données (111).

10. Dispositif de communication comprenant :
- une entrée (Rx, A) pour la réception de données
- une sortie (Tx, B) pour la délivrance de données,
- une mémoire temporaire de données (110) ayant une taille prédéterminée, et
- un système de commande (120) qui est agencé pour stocker temporairement des données reçues via l'entrée (Rx, A) dans la mémoire temporaire de données (110), pour délivrer les données stockées temporairement dans la mémoire temporaire de données (110) via la sortie (Tx, B), pour déterminer une taille d'une zone de données, non utilisées par les données reçues, dans la mémoire temporaire de données (110), et pour délivrer des données supplémentaires via la sortie (Tx, B) en fonction de la taille de la zone de données, non utilisées par les données reçues, dans la mémoire temporaire de données (110).

11. Dispositif de communication selon la revendication 10, dans lequel le dispositif de communication (100) est agencé pour l'exécution du procédé selon l'une quelconque des revendications 1 à 9.
